# EUROPEAN PATENT SPECIFICATION

(11) **EP 4 576 527 B1**
(45) Date of publication and mention of the grant of the patent: **16.09.2026**
(21) Application number: 23307279.2
(22) Date of filing: 20.12.2023
(51) Int. Cl.: H02M 1/00, H02M 1/08, H02M 1/32, H02M 1/42, H02M 7/219

(54) **AC-TO-DC CONVERTER WITHOUT VOLTAGE MEASUREMENT OF AC POWER SOURCE**
WECHSELSTROM-GLEICHSTROM-WANDLER OHNE SPANNUNGSMESSUNG DER WECHSELSTROMQUELLE
CONVERTISSEUR CA-CC SANS MESURE DE TENSION DE SOURCE D'ALIMENTATION CA

(43) Date of publication of application: 25.06.2025
(73) Proprietor: NXP B.V., 5656 AG Eindhoven (NL)
(72) Inventor: Dietsch, Jérôme, 31023 Toulouse (FR); Galtie, Franck, 31023 Toulouse (FR)
(74) Representative: Schmütz, Christian Klaus Johannes

(56) References cited:
- EP-A1- 3 393 025
- CN-A- 114 744 865
- US-A1- 2012 086 371
- US-A1- 2019 006 954

## Description

### BACKGROUND

An AC-to-DC converter system converts alternating current (AC) power from the grid to direct current (DC) power, which can then be used to charge a battery. One type of an AC-to-DC converter system is a power factor correction (PFC) system. A PFC system is designed to increase the power factor of the system to more efficiently use the electrical current from an AC power source. Such a system can be used in on-board charger applications, where the current sunk from the system needs to be synchronized with the grid voltage to maximize active power consumption from the grid. In order to do so, a grid voltage measurement device is implemented in the system to continuously measure the grid voltage.

However, if the grid voltage measurement device is not operational, then the system is usually stopped because the system is unable to measure the grid voltage. Only when the grid voltage measurement device becomes operational again, can the system be restarted. Thus, there is a need for a system that can operate even when the grid voltage measurements are not available.
EP 3393025 A1 discloses a method and system for controlling a rectifier, in which frequency information and switching information of a power generator is received, a predicted switching interval obtained according to the frequency information and switching information, a feedback signal obtained according to two terminals of at least one component of the rectifier, and a switching signal of the rectifier switched within the predicted switching interval according to the feedback signal.
US 2019/006954 A1 discloses a synchronous bridge rectifier comprising a plurality of synchronously switched elements and a plurality of controller circuits, one for each of the synchronously switched elements. Each controller circuit is configured to sense voltage across the corresponding synchronously switched element to control opening and closing of the synchronously switched element so as to rectify the alternating current input signal to form a direct current output signal.
US 2012/086371 A1 discloses a rotary electric machine for vehicles, in which a switching section includes a bridge circuit having plurality of upper arms and plurality of lower arms. The arms include switching elements. A diode is connected in parallel to each switching element. One end of the switching element of each of the upper arms is connected to a positive terminal of a battery and one end of the switching element of each of the lower arms is connected to a negative terminal of the battery via a vehicle body. The switching section rectifies induced phase voltage of an armature winding. A section sets ON-timing of the switching elements. A section sets OFF-timing of the switching elements. When the switching element of each lower arm is OFF, a detector detects an energization period in which current flows to the diode. A calculator calculates a rotation frequency based on the detected energization period.
CN 114744865 A discloses a double-inductor bridgeless Boost PFC circuit and a control method thereof. The circuit comprises a main topological structure circuit, a double-closed-loop control loop, a first logic circuit and a second logic circuit. Four paths of different PWM control signals are obtained and are respectively used for controlling four corresponding switch tubes. The circuit can realize accurate control of output voltage and correction of power factors after being controlled by the double closed-loop control loop, first logic circuit and second logic circuit.

### SUMMARY

According to the invention there is provided an AC-to-DC converter system and method as defined by the appended claims.

These and other aspects in accordance with embodiments will become apparent from the following detailed description, taken in conjunction with the accompanying drawings, illustrated by way of example of the principles of the embodiments.

### BRIEF DESCRIPTION OF THE DRAWINGS

Fig. 1 is a diagram of an AC-to-DC converter system in accordance with an embodiment of the invention.
Fig. 2 is a flow diagram of an overall operational process of the AC-to-DC converter system in accordance with an embodiment of the invention.
Fig. 3 shows the relationship between the grid voltage V_{GRID} and the output voltage V_{OUT} when transistors of a transistor network in the AC-to-DC converter system are used as a passive rectifier with a direct current-to-direct current (DC/DC) converter in the AC-to-DC converter system turned off in accordance with an embodiment of the invention.
Fig. 4 illustrates a negative-to-positive zero voltage crossing (transition) detection in accordance with an embodiment of the invention.
Fig. 5 illustrates a positive-to-negative zero voltage crossing (transition) detection in accordance with an embodiment of the invention.
Fig. 6 is a flow diagram of a grid voltage transition detection process of the AC-to-DC converter system in accordance with an embodiment of the invention.
Fig. 7 illustrates potential monitoring windows for both types of grid voltage transitions in accordance with an embodiment of the invention
Fig. 8 is a process flow diagram of a method in accordance with an embodiment of the invention.

Throughout the description, similar reference numbers may be used to identify similar elements.

### DETAILED DESCRIPTION

It will be readily understood that the components of the embodiments as generally described herein and illustrated in the appended Figs. could be arranged and designed in a wide variety of different configurations. Thus, the following more detailed description of various embodiments, as represented in the Figures, is not intended to limit the scope of the present disclosure, but is merely representative of various embodiments. While the various aspects of the embodiments are presented in drawings, the drawings are not necessarily drawn to scale unless specifically indicated.

The described embodiments are to be considered in all respects only as illustrative and not restrictive. The scope of the embodiments is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment", "an embodiment", or similar language means that a particular feature, structure, or characteristic described in connection with the indicated embodiment is included in at least one embodiment of the present invention. Thus, the phrases "in one embodiment", "in an embodiment", and similar language throughout this specification may, but do not necessarily, all refer to the same embodiment.

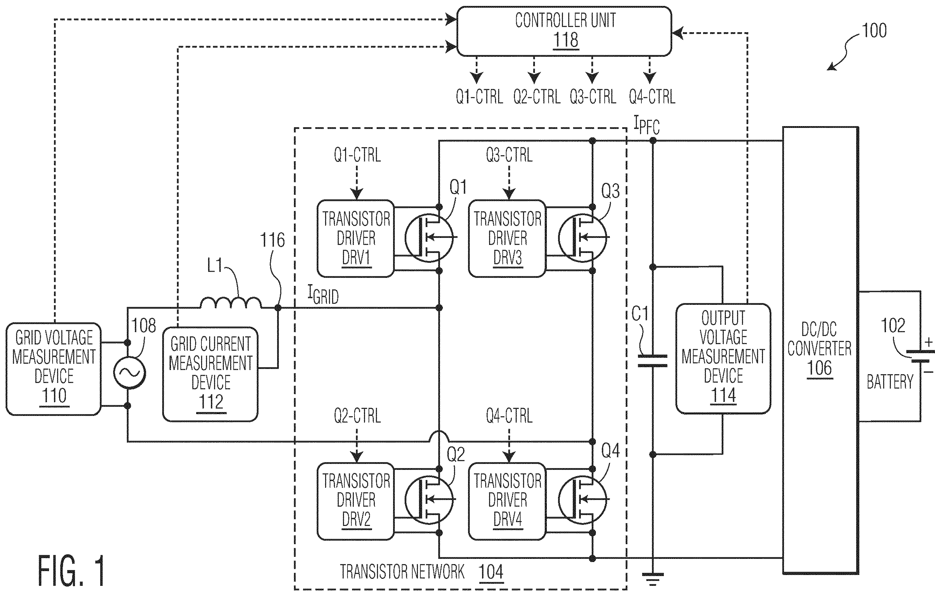

Turning now to Fig. 1, an AC-to-DC converter system 100 in accordance with an embodiment of the invention is shown. The AC-to-DC converter system 100 is a PFC system, which operates to increase the power factor to more efficiently use the electrical current from an AC power source. In the illustrated embodiment, the AC-to-DC converter system 100 is implemented as an on-board charger for a battery. However, the AC-to-DC converter system 100 may be used in other PFC applications. As described below, the AC-to-DC converter system 100 is designed to operate even when voltage measurements of the AC power source are not available, which provides a significant advantage over conventional AC-to-DC converter systems.

As shown in Fig. 1, the AC-to-DC converter system 100 includes an inductor L1, a transistor network 104, an output capacitor C1 and a direct current-to-direct current (DC/DC) converter 106. The inductor L1 is connected to an AC power source 108, e.g., the grid, and to the transistor network 104. The transistor network 104 includes transistors Q1, Q2, Q3 and Q4 and transistor drivers DRV1, DRV2, DRV3 and DRV4 that provide driving signals to the transistors Q1, Q2, Q3 and Q4, respectively. The transistor network 104 can function as an active rectifier. In the illustrated embodiment, the transistors Q1, Q2, Q3 and Q4 are metal oxide semiconductor field-effect transistors (MOSFETs), and thus, the transistor drivers DRV1, DRV2, DRV3 and DRV4 are gate drivers. However, in other embodiments, the transistors may be different type of transistors.

The transistors Q1 and Q2 are connected in series to ground or a low voltage terminal. Similarly, the transistors Q3 and Q4 are connected in series to ground. The control terminals or gates of the transistors Q1, Q2, Q3 and Q4 are connected to the transistor drivers DRV1, DRV2, DRV3 and DRV4, respectively, and thus, the transistors Q1, Q2, Q3 and Q4 are controlled by the transistor drivers DRV1, DRV2, DRV3 and DRV4, respectively. Each transistor driver is also connected to the drain and source (current-path terminals of a MOSFET) of the respective transistor to measure or monitor the drain-source voltage VDS of that transistor, i.e., the voltage across the current-path terminals of the transistor. In some embodiments, this functionality is done by only a comparator, which is sufficient to detect a switching behavior of the drain-source voltage VDS of the transistor.

The transistor network 104 is connected to the output capacitor C1, which receives the PFC current I_{PFC} from the transistor network. The output capacitor C1 is connected to the DC-to-DC converter 106, which converts the voltage from the network 104 to an appropriate stable voltage to charge the battery 102.

The AC-to-DC converter system 100 further includes a grid voltage measurement device 110, a grid current measurement device 112, and an output voltage measurement device 114. The grid voltage measuring device 110 is connected to the AC power source 108 to measure the grid voltage. This grid voltage information is used by the system to detect negative and positive signs of the grid voltage, which is used as a reference for current synchronization to the voltage. The grid voltage measurement may also be used to determine the instantaneous power that the system can drain from the grid to ensure a high power factor on the converter based on the amplitude of the grid. In the illustrated embodiment, the grid current measurement device 112 is connected to a node 116 between the inductor L1 and the transistor network 104 to measure the sinusoidal phase current on the grid. In other embodiments, the grid current measurement device 112 may measure the sinusoidal phase current on the grid at the node 116 without physically touching the node 116. The grid current measurement device 112 may use any type of a current sensor, such as a transformer, shunts and amplifier, hall sensor, etc. In some embodiments, the grid current measurement device 112 may make the grid current measurement at a location between the inductor L1 and the AC power source 108. The grid current measurement data is used as feedback to regulate the PFC current I_{PFC} consumed by the AC-to-DC converter system 100. The output voltage measurement device 114 is connected to the output capacitor C1 to measure the output voltage from the transistor network 104, which is the input voltage to the DC-to-DC (DC/DC) converter 106. Voltage and current measurement devices are well known, and thus, the measurement devices 110, 112 and 114 are not described in detail herein.

These measurements are provided to a controller unit 118, where the measurements are used to control the transistors Q1, Q2, Q3 and Q4 via the transistor drivers DRV1, DRV2, DRV3 and DRV4 using controls signals. In particular, the controller unit 118 generates control signals Q1-CTRL, Q2-CTRL, Q3-CTRL and Q4-CTRL for the transistor drivers DRV1, DRV2, DRV3 and DRV4, respectively, to control the transistor Q1, Q2, Q3 and Q4. In operation, these control signals are generated to shape the input current I_{GRID} to be in phase with the instantaneous grid voltage and minimize the apparent power consumed from the grid using the grid voltage, grid current and output voltage measurements.

In some conventional AC-to-DC converter systems, if one of the grid voltage, grid phase current and output voltage measurements is not available due to any error, the system is stopped until the problem is resolved. However, in the AC-to-DC converter system 100, if only the grid voltage measurement is not available, the AC-to-DC converter system is able to continue to run based on grid voltage estimation, as described below.

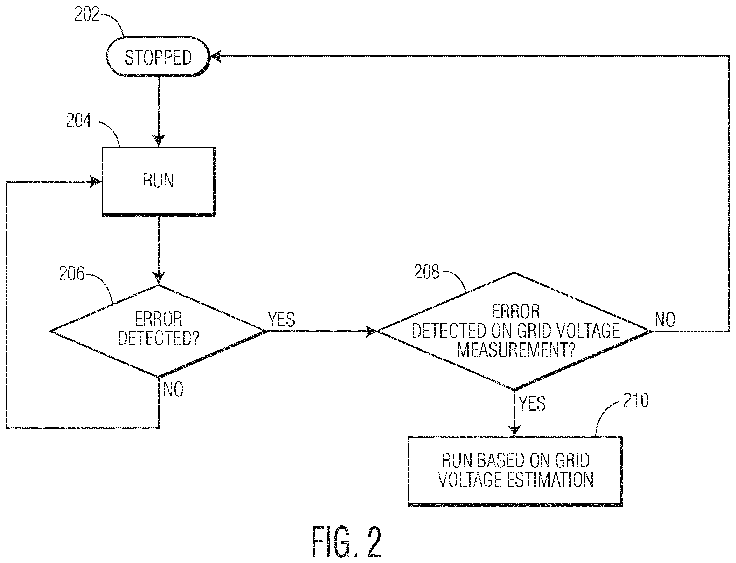

Turning now to Fig. 2, a flow diagram of an overall operational process of the AC-to-DC converter system 100 in accordance with an embodiment of the invention is shown. As shown in Fig. 2, the AC-to-DC converter system 100 is initially stopped, as indicated by step 202. The AC-to-DC converter system then runs to charge the battery 102 using power from the AC source 108, e.g., the grid or generator, as indicated by step 204. Next, at step 206, a determination is made whether an error is detected. If an error is detected, a determination is made whether the error detected concerns the grid voltage measurement, as indicated by step 208. If no error is detected, the AC-to-DC converter system continues to run, as indicated by step 204.

If the error detected does not concern the grid voltage measurement, then the AC-to-DC converter system 100 is stopped, as indicated by step 202. However, if the error detected does concern the grid voltage measurement, then the AC-to-DC converter system continues to run based on grid voltage estimation, as indicated by step 210. Thus, in contrast to conventional AC-to-DC converter systems, the AC-to-DC converter system 100 can run even when the grid voltage measurement is not available.

Turning back to Fig. 1, the controller unit 118 estimates the grid voltage in two steps, which are (1) amplitude detection and (2) zero voltage crossing detection / frequency synchronization.

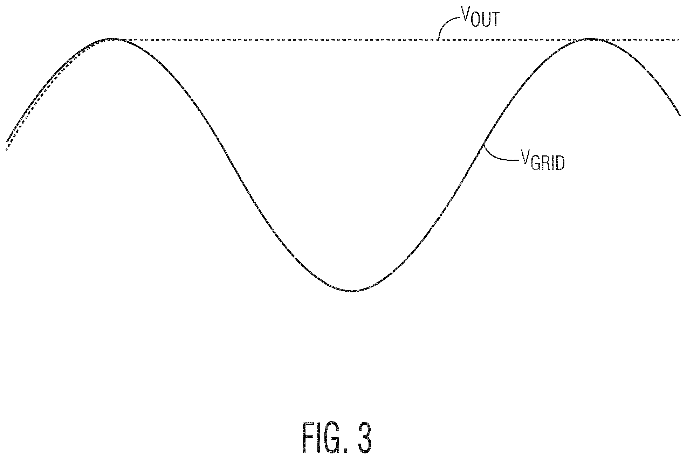

The amplitude detection step involves detecting the maximum grid voltage. In order to determine the maximum grid voltage, the controller unit 118 can rely on the previous maximum grid voltage measurement made during the same charging cycle as the failure, assuming such measurement was recorded. Alternatively, the controller unit can rely on the peak AC voltage that is measured using the four transistors Q1, Q2, Q3 and Q4 as a passive rectifier and switching off the DC/DC converter 106. The peak voltage can be measured using the output voltage measurements made by the output voltage measurement device 114 during few grid periods, as illustrated in Fig. 3, which shows the relationship between the grid voltage V_{GRID} and the output voltage V_{OUT} when the four transistors Q1, Q2, Q3 and Q4 are used as a passive rectifier with the DC/DC converter 106 turned off.

The zero voltage crossing detection / frequency synchronization step involves using the peak AC voltage to detect the zero voltage crossings of the grid voltage in both directions (i.e., positive to negative and negative to positive) to ensure that the output voltage to the DC/DC converter 106 is properly maintained. In the following, the detection of the zero voltage crossings in the negative-to-positive direction is described first. The detection of the zero voltage crossings in the positive-to-negative direction is then described.

The negative-to-positive zero voltage crossing is detected by applying a pulse-width modulation (PWM) stimuli signal from the controller unit 118 to the low side transistor Q2 in the transistor network 104 via the transistor driver DRV2. When the grid phase voltage turns positive, this positive grid phase voltage starts to create a positive current flow when the transistor Q2 is activated. When the transistor Q2 is switched off, the current in the inductor L1 is freewheeling through the body diode of the high side transistor Q1, the capacitor C1 and the body diode of the transistor Q4. This creates a VDS drop on the transistor Q1 and it can be detected by a drain-source voltage VDS drop monitoring/measurement. The VDS drop on the transistor Q1 can be detected using the VDS monitoring feature of the transistor driver DRV1, digital phase feedback or even the PFC current I_{PFC} with synchronization of the measurement at the beginning of the free-wheeling period. The on-time characteristics of the PWM stimuli signal mainly depends on the transistor driver (e.g., switches in the driver), the detection mechanisms accuracy and the inductor L1. The goal is to provide a sufficient amount of on-time stimuli to start the transistor Q1 body diode conduction for at most few hundred nanoseconds.

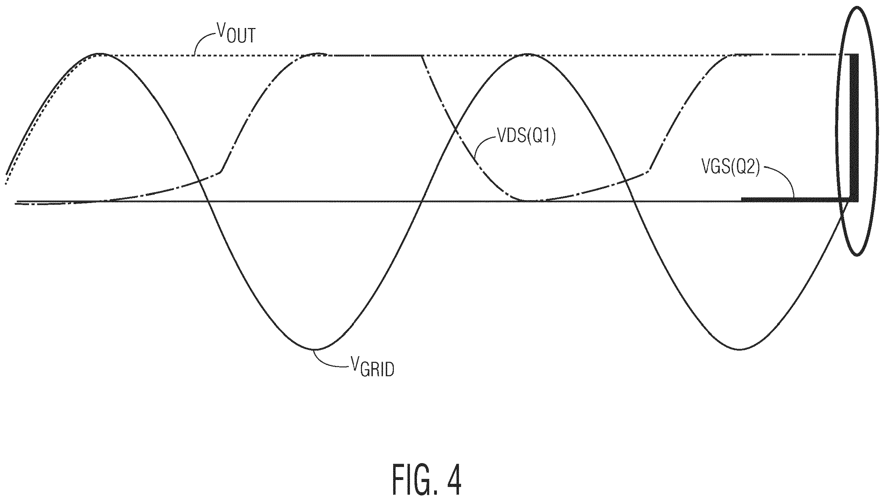

The negative-to-positive zero voltage crossing (transition) detection is illustrated in Fig. 4, which shows the output voltage V_{OUT}, the grid voltage V_{GRID}, the VDS voltage of the transistor Q1, i.e., VDS(Q1), and the gate-source voltage V_{GS} of the transistor Q2, i.e., VGS(Q2). When the PWM stimuli is applied to the transistor Q2, as indicated by the signal VGS(Q2), the VDS(Q1) drops dramatically (circled in Fig. 4), which indicates the negative-to-positive zero voltage crossing. When the negative-to-positive transition is detected, a timer can be started to measure the time between the negative-to-positive and positive-to-negative transitions to estimate the grid voltage phase.

The positive-to-negative zero voltage crossing is detected by applying a PWM stimuli from the controller unit 118 to the high side transistor Q1 via the transistor driver DRV1. When the grid phase voltage turns negative, this negative grid phase voltage can be detected by a VDS drop on the transistor Q2 in the free-wheeling phase. The VDS drop on the transistor Q2 can be detected using the VDS monitoring by the transistor driver DRV2, digital phase feedback or even the PFC current I_{PFC} with synchronization of the measurement at the beginning of the free-wheeling period.

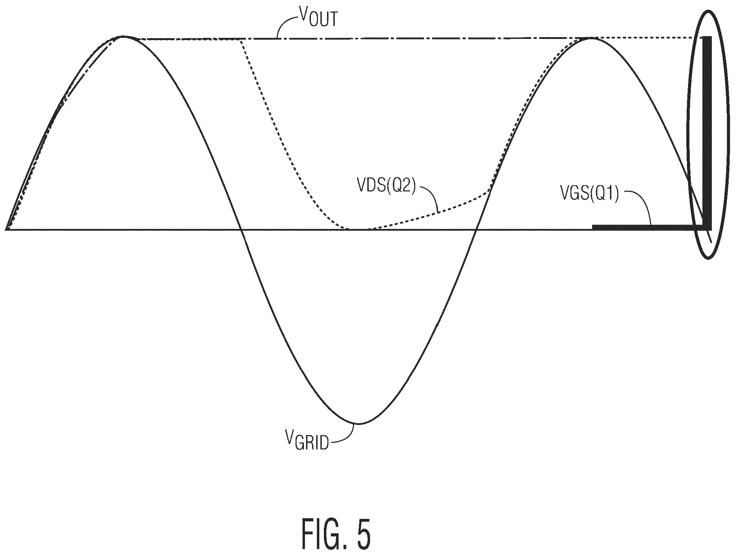

The positive-to-negative zero voltage crossing (transition) detection is illustrated in Fig. 5, which shows the output voltage V_{OUT}, the grid voltage V_{GRID}, the VDS voltage of the transistor Q1 VDS(Q1) and the VGS voltage of Q2 VGS(Q2). When the PWM stimuli signal is applied to the transistor Q1, as indicated by the signal VGS(Q1), the VDS(Q2) drops dramatically (circled in Fig. 5), which indicates the negative-to-positive zero voltage crossing. When both positive-to-negative and negative-to-positive transitions are detected, the AC-to-DC converter system 100 can start normal operation based on the estimated grid frequency and on the transition instant. The controller unit 118 can continue to monitor the transitions to keep the system operation synchronized with the grid, i.e., the AC power source. This monitoring can be done at each expected transition or at a lower rate with usage of a tracking mechanism, such as a tracking algorithm or a phase locked loop.

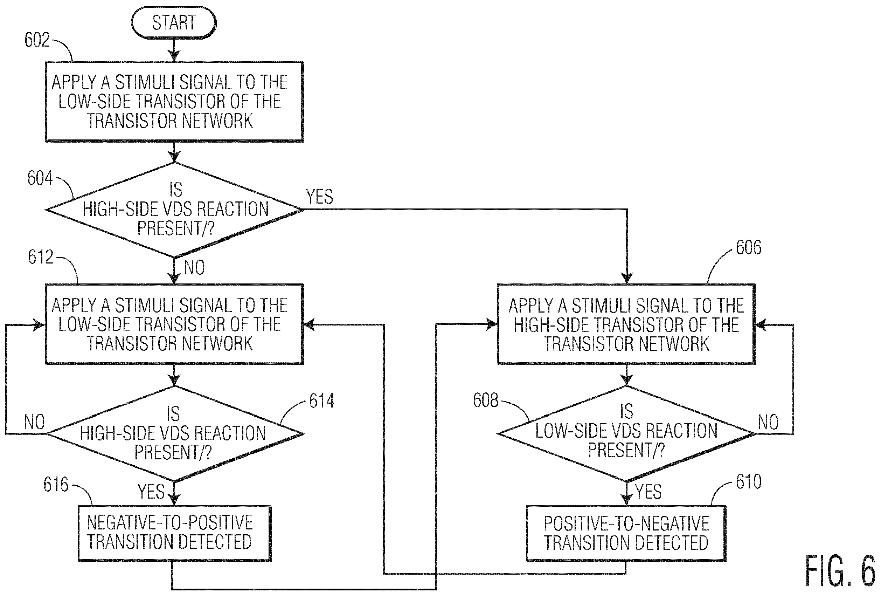

Turning now to Fig. 6, a flow diagram of a grid voltage transition detection process of the AC-to-DC converter system 100 in accordance with an embodiment of the invention is illustrated. As shown in Fig. 6, the transition detection process begins at step 602, where a stimuli signal is applied to the low-side transistor Q2 of the transistor network 104. In an embodiment, the stimuli signal is a PWM signal that is applied to the gate of the target transistor. Next, at step 604, a determination is made by the controller unit 118 whether a preliminary high-side VDS reaction is present, i.e., a sudden drop in the VDS of the transistor Q1.

If a preliminary high-side VDS reaction is present, the process proceeds to step 606, where a stimuli signal is applied to the high-side transistor Q1 of the transistor network 104. Next, at step 608, a determination is made by the controller unit 118 whether a low-side VDS reaction is present, i.e., a sudden drop in the VDS of the transistor Q2. If a low-side VDS reaction is not present, the process proceeds back to step 606 for another attempt. This loop is repeated until a low-side VDS reaction is present when the grid voltage turns negative. However, if a low-side VDS reaction is present, the process proceeds to step 610, where a determination is made by the controller unit that positive-to-negative transition of the grid voltage has been detected. The process then proceeds to step 612 to detect the next negative-to-positive transition of the grid voltage.

The process also proceeds to step 612 when a preliminary high-side VDS reaction is not present. At step 612, a stimuli signal is applied to the low-side transistor Q2 of the transistor network 104. Next, at step 614, a determination is made by the controller unit 118 whether a high-side VDS reaction is present, i.e., a sudden drop in the VDS of the transistor Q1. If a high-side VDS reaction is not present, the process proceeds back to step 612 for another attempt. This loop is repeated until a high-side VDS reaction is present when the grid voltage turns positive. However, if a high-side VDS reaction is present, the process proceeds to step 616, where a determination is made by the controller unit that negative-to-positive transition of the grid voltage has been detected. The process then proceeds to step 606 to detect positive-to-negative transition.

Thus, the transistors Q1 and Q2 are used to detect negative-to-positive and positive-to-negative transitions of the AC power supply 108. However, in other embodiments, the transistors Q3 and Q4 may be used to detect negative-to-positive and positive-to-negative transitions in a similar manner. In these embodiments, the high-side transistor is the transistor Q3 and the low-side transistor is the transistor Q4.

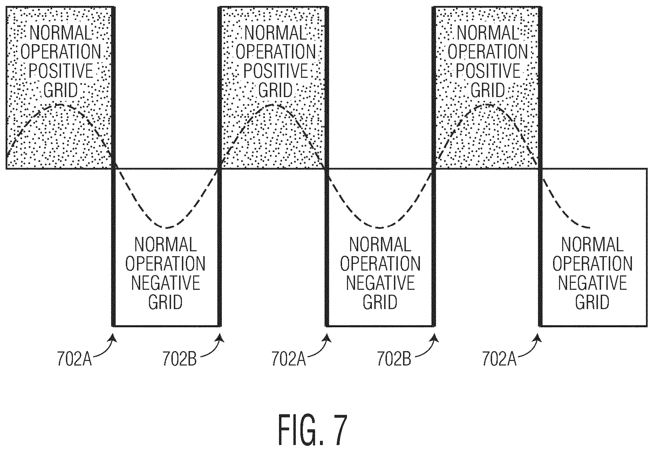

As explained above, the controller unit 118 can continue to monitor the transitions to keep the system operation synchronized with the grid. This monitoring can be done at each expected transition or at a lower rate. Fig. 7 illustrates potential monitoring windows for both types of grid voltage transitions in accordance with an embodiment of the invention. As shown in Fig. 7, the potential monitoring windows include potential monitoring windows 702A for detecting positive-to-negative transitions of the grid voltage and potential monitoring windows 702B for detecting negative-to-positive transitions of the grid voltage. By detecting these transitions and using the measured or stored maximum amplitude of the grid voltage, the AC-to-DC converter system 100 can continue to run in a standard fashion in sync with the grid voltage with normal "positive" operation when the grid voltage has transitioned from negative to positive and with normal "negative" operation when the grid voltage has transitioned back from positive to negative.

In other embodiments, the described grid voltage transition detection process may be implemented in multi-phase AC-to-DC converter systems, such as a three (3) phase AC-to-DC converter system. If the multi-phase AC-to-DC converter system is connected to multiple AC power sources and voltage measurements are not available for one of the AC power sources, the multi-phase AC-to-DC converter system can continue operation using the other AC power sources in degraded mode without any specific mechanism. However, if the multi-phase AC-to-DC converter system is connected to a single AC power source and voltage measurements are not available for the AC power source, then the described grid voltage transition detection process can be applied on the faulty leg of the multi-phase AC-to-DC converter system.

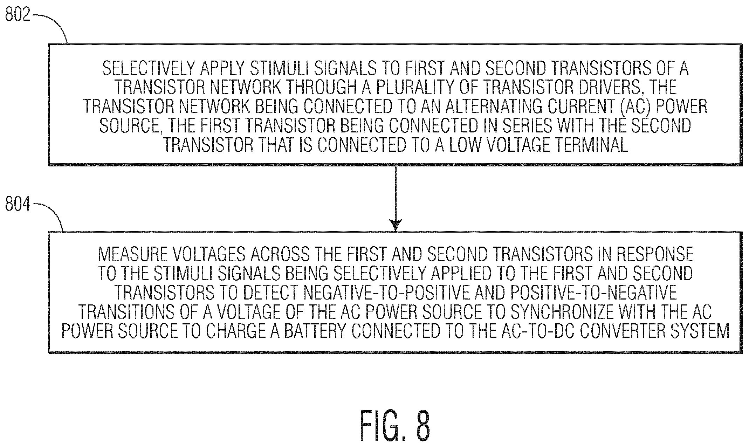

A method in accordance with an embodiment of the invention is described with reference to a process flow diagram of Fig. 8. At block 802, stimuli signals are selectively applied to first and second transistors of a transistor network of an AC-to-DC converter system through a plurality of transistor drivers. The transistor network is connected to an alternating current (AC) power source. In addition, the first transistor is connected in series with the second transistor that is connected to a low voltage terminal. At block 804, voltages across the first and second transistors are detected in response to the stimuli signals being selectively applied to the first and second transistors to detect negative-to-positive and positive-to-negative transitions of a voltage of the AC power source to synchronize with the AC power source to charge a battery connected to the AC-to-DC converter system.

Although the operations of the method(s) herein are shown and described in a particular order, the order of the operations of each method may be altered so that certain operations may be performed in an inverse order or so that certain operations may be performed, at least in part, concurrently with other operations. In another embodiment, instructions or sub-operations of distinct operations may be implemented in an intermittent and/or alternating manner.

It can also be noted that at least some of the operations for the methods described herein may be implemented using software instructions stored on a computer useable storage medium for execution by a computer. As an example, an embodiment of a computer program product includes a computer useable storage medium to store a computer readable program.

The computer-useable or computer-readable storage medium can be an electronic, magnetic, optical, electromagnetic, infrared, or semiconductor system (or apparatus or device). Examples of non-transitory computer-useable and computer-readable storage media include a semiconductor or solid-state memory, magnetic tape, a removable computer diskette, a random-access memory (RAM), a read-only memory (ROM), a rigid magnetic disk, and an optical disk.

Alternatively, embodiments of the invention may be implemented entirely in hardware or in an implementation containing both hardware and software elements. In embodiments that use software, the software may include but is not limited to firmware, resident software, microcode, etc.

Although specific embodiments of the invention have been described and illustrated, the invention is not to be limited to the specific forms or arrangements of parts so described and illustrated. The scope of the invention is only limited by the appended claims.

## Claims

1. A power factor correction, PFC, AC-to-DC converter system (100) comprising:
a transistor network (104) connectable to an alternating current, AC, power source (108), the transistor network (104) including at least a first transistor (Q1) connected in series with a second transistor (Q2) that is connected to a low voltage terminal;
a plurality of transistor drivers (DRV1, DRV2) connected to at least the first and second transistors (Q1, Q2) to drive the first and second transistors (Q1, Q2);
a controller unit (118) connected to the transistor drivers (DRV1, DRV2) is configured to control the first and second transistors (Q1, Q2) and to detect negative-to-positive and positive-to-negative transitions of a voltage of the AC power source (108) based on detected voltages across the first and second transistors (Q1, Q2);
**characterized in that:**
the power factor correction AC-to-DC converter system further comprises a voltage measurement device (110) connectable to the AC power source (108) and configured to measure the voltage of the AC power source (108) and provide said voltage to the controller unit (118), which is configured to detect an error in the voltage measurement device; and
wherein in a case of said detected error the controller unit (118) is further configured to detect negative-to-positive and positive-to-negative transitions of the voltage of the AC power source (108);
wherein the controller unit (118) is configured to generate and apply a pulse width modulation, PWM, stimuli signal to the second transistor (Q2) and detect a negative-to-positive transition of the voltage of the AC power source (108) based on the measured voltage across the first transistor (Q1); and
wherein the controller unit (118) is configured to generate and apply a pulse width modulation, PWM, stimuli signal to the first transistor (Q1) and detect a positive-to-negative transition of the voltage of the AC power source (108) based on the measured voltage across the second transistor (Q2).

2. The PFC AC-to-DC converter system (100) of claim 1, wherein the controller unit (118) is operable to apply the stimuli signal to a control terminal of the second transistor (Q2) and wherein the voltage across the first transistor (Q1) is a voltage across current-path terminals of the first transistor (Q1).

3. The PFC AC-to-DC converter (100) system of claim 2, wherein the first and second transistors (Q1, Q2) are field-effect transistors, wherein the controller unit (118) is operable to apply the stimuli signal to a gate of the second transistor (Q2), and wherein the voltage across current-path terminals of the first transistor (Q1) is a drain-to-source voltage of the first transistor (Q1).

4. The PFC AC-to-DC converter system (100) of claim 1, wherein the controller unit (118) is operable to apply the stimuli signal to a control terminal of the first transistor (Q1) and wherein the voltage across the second transistor (Q2) is a voltage across current-path terminals of the first transistor (Q1).

5. A method of operating a PFC AC-to-DC converter system (100) according to claim 1, the method comprising, when an error is detected regarding the measurements of the voltage of the AC power source (108):
selectively applying (602, 606, 612, 802) PWM stimuli signals to the first and second transistors (Q1, Q2) of the transistor network (104) of the AC-to-DC converter system (100) through the plurality of transistor drivers (DRV1, DRV2); and
detecting (616, 610, 804) voltages across the first and second transistors (Q1, Q2) in response to the PWM stimuli signals being selectively applied to the first and second transistors (Q1, Q2) to detect negative-to-positive and positive-to-negative transitions of a voltage of the AC power source (108) to synchronize with the AC power source (108) to charge a battery (102) connected to the AC-to-DC converter system (100),
wherein selectively applying (602, 606, 612) the PWM stimuli signals to the first and second transistors (Q1, Q2) of the transistor network (104) includes applying a PWM stimuli signal to the second transistor (Q2) to measure a voltage across the first transistor (Q1) to detect a negative-to-positive transition of the voltage of the AC power source (108) and applying a PWM stimuli signal to the first transistor (Q1) to measure a voltage across the second transistor (Q2) to detect a positive-to-negative transition of the voltage of the AC power source (108).

6. The method of claim 5, wherein applying a stimuli signal to the second transistor (Q2) includes applying the stimuli signal to a control terminal of the second transistor (Q2) and wherein the voltage across the first transistor (Q1) is a voltage across current-path terminals of the first transistor (Q1).

7. The method of claim 6, wherein the first and second transistors (Q1, Q2) are field-effect transistors, wherein applying the stimuli signal to the control terminal of the second transistor (Q2) includes applying the stimuli signal to a gate of the second transistor (Q2), and wherein the voltage across the current-path terminals of the first transistor (Q1) is a drain-to-source voltage of the first transistor (Q1).

8. The method of claim 5, wherein applying the stimuli signal to the first transistor (Q1) includes applying the stimuli signal to a control terminal of the first transistor (Q1) and wherein the voltage across the second transistor (Q2) is a voltage across current-path terminals of the first transistor (Q1).

## Patentansprüche

1. AC-DC-Wandlersystem (100) mit Leistungsfaktorkorrektur bzw. PFC-AC-DC-Wandlersystem, umfassend:
ein Transistornetzwerk (104), das mit einer Wechselstrom- bzw. AC-Leistungsquelle (108) verbindbar ist, wobei das Transistornetzwerk (104) zumindest einen ersten Transistor (Q1) beinhaltet, der mit einem zweiten Transistor (Q2) in Reihe verbunden ist, der mit einem Niederspannungsanschluss verbunden ist;
mehrere Transistoransteuerungen (DRV1, DRV2), die mit mindestens dem ersten und dem zweiten Transistor (Q1, Q2) verbunden sind, um den ersten und den zweiten Transistor (Q1, Q2) anzusteuern;
eine Steuerungseinheit (118), die mit den Transistoransteuerungen (DRV1, DRV2) verbunden ist, und dazu ausgelegt ist, den ersten und den zweiten Transistor (Q1 Q2) zu steuern und Negativ-zu-Positiv- und Positiv-zu-Negativ-Übergänge einer Spannung der AC-Leistungsquelle (108) basierend auf detektierten Spannungen über den ersten und den zweiten Transistor (Q1, Q2) zu detektieren;
**dadurch gekennzeichnet, dass**:
das AC-DC-Wandlersystem mit Leistungsfaktorkorrektur ferner eine Spannungsmessvorrichtung (110) umfasst, die mit der AC-Leistungsquelle (108) verbindbar ist und dazu ausgelegt ist, die Spannung der AC-Leistungsquelle (108) zu messen und die Spannung an die Steuerungseinheit (118) bereitzustellen, die dazu ausgelegt ist, einen Fehler in der Spannungsmessvorrichtung zu detektieren; und
wobei in einem Fall des detektierten Fehlers die Steuerungseinheit (118) ferner dazu ausgelegt ist, Negativ-zu-Positiv- und Positiv-zu-Negativ-Übergänge der Spannung der AC-Leistungsquelle (108) zu detektieren;
wobei die Steuerungseinheit (118) dazu ausgelegt ist, ein Pulsweitenmodulations- bzw. PWM-Stimulussignal zu erzeugen und an den zweiten Transistor (Q2) anzulegen und einen Negativ-zu-Positiv-Übergang der Spannung der AC-Leistungsquelle (108) basierend auf der gemessenen Spannung über den ersten Transistor (Q1) zu detektieren; und
wobei die Steuerungseinheit (118) dazu ausgelegt ist, ein Pulsweitenmodulations- bzw. PWM-Stimulussignal zu erzeugen und an den ersten Transistor (Q1) anzulegen und einen Positiv-zu-Negativ-Übergang der Spannung der AC-Leistungsquelle (108) basierend auf der gemessenen Spannung über den zweiten Transistor (Q2) zu detektieren.

2. PFC-AC-DC-Wandlersystem (100) nach Anspruch 1, wobei die Steuerungseinheit (118) betreibbar ist, um das Stimulussignal an einen Steueranschluss des zweiten Transistors (Q2) anzulegen, und wobei die Spannung über den ersten Transistor (Q1) eine Spannung über Strompfadanschlüsse des ersten Transistors (Q1) ist.

3. PFC-AC-DC-Wandlersystem (100) nach Anspruch 2, wobei der erste und der zweite Transistor (Q1, Q2) Feldeffekttransistoren sind, wobei die Steuerungseinheit (118) betreibbar ist, um das Stimulussignal an ein Gate des zweiten Transistors (Q2) anzulegen, und wobei die Spannung über Strompfadanschlüsse des ersten Transistors (Q1) eine Drain-Source-Spannung des ersten Transistors (Q1) ist.

4. PFC-AC-DC-Wandlersystem (100) nach Anspruch 1, wobei die Steuerungseinheit (118) betreibbar ist, um das Stimulussignal an einen Steueranschluss des ersten Transistors (Q1) anzulegen, und wobei die Spannung über den zweiten Transistor (Q2) eine Spannung über Strompfadanschlüsse des ersten Transistors (Q1) ist.

5. Verfahren zum Betreiben eines PFC-AC-DC-Wandlersystems (100) nach Anspruch 1, wobei das Verfahren Folgendes umfasst, wenn ein Fehler bezüglich der Messungen der Spannung der AC-Stromquelle (108) detektiert wird:
selektives Anlegen (602, 606, 612, 802) von PWM-Stimulussignalen an den ersten und den zweiten Transistor (Q1, Q2) des Transistornetzwerks (104) des AC-DC-Wandlersystems (100) über die mehreren Transistoransteuerungen (DRV1, DRV2); und
Detektieren (616, 610, 804) von Spannungen über den ersten und den zweiten Transistor (Q1, Q2) als Reaktion darauf, dass die PWM-Stimulussignale selektiv an den ersten und den zweiten Transistor (Q1, Q2) angelegt werden, um Negativ-zu-Positiv- und Positiv-zu-Negativ-Übergänge einer Spannung der AC-Leistungsquelle (108) zu detektieren, um mit der AC-Leistungsquelle (108) zu synchronisieren, um eine Batterie (102) zu laden, die mit dem AC-DC-Wandlersystem (100) verbunden ist,
wobei das selektive Anlegen (602, 606, 612) der PWM-Stimulussignale an den ersten und den zweiten Transistor (Q1, Q2) des Transistornetzwerks (104) das Anlegen eines PWM-Stimulussignals an den zweiten Transistor (Q2), um eine Spannung über den ersten Transistor (Q1) zu messen, um einen Negativ-zu-Positiv-Übergang der Spannung der AC-Leistungsquelle (108) zu detektieren, und das Anlegen eines PWM-Stimulussignals an den ersten Transistor (Q1), um eine Spannung über den zweiten Transistor (Q2) zu messen, um einen Positiv-zu-Negativ-Übergang der Spannung der AC-Leistungsquelle (108) zu detektieren, beinhaltet.

6. Verfahren nach Anspruch 5, wobei das Anlegen eines Stimulussignals an den zweiten Transistor (Q2) das Anlegen des Stimulussignals an einen Steueranschluss des zweiten Transistors (Q2) beinhaltet, und wobei die Spannung über den ersten Transistor (Q1) eine Spannung über Strompfadanschlüsse des ersten Transistors (Q1) ist.

7. Verfahren nach Anspruch 6, wobei der erste und der zweite Transistor (Q1, Q2) Feldeffekttransistoren sind, wobei das Anlegen des Stimulussignals an den Steueranschluss des zweiten Transistors (Q2) das Anlegen des Stimulussignals an ein Gate des zweiten Transistors (Q2) beinhaltet, und wobei die Spannung über den Strompfadanschlüssen des ersten Transistors (Q1) eine Drain-Source-Spannung des ersten Transistors (Q1) ist.

8. Verfahren nach Anspruch 5, wobei das Anlegen des Stimulussignals an den ersten Transistor (Q1) das Anlegen des Stimulussignals an einen Steueranschluss des ersten Transistors (Q1) beinhaltet, und wobei die Spannung über den zweiten Transistor (Q2) eine Spannung über Strompfadanschlüsse des ersten Transistors (Q1) ist.

## Revendications

1. Système convertisseur alternatif-continu à correction du facteur de puissance, PFC, (100) comprenant :
un réseau de transistors (104) pouvant être connecté à une source d'alimentation en courant alternatif (108), le réseau de transistors (104) comportant au moins un premier transistor (Q1) connecté en série avec un deuxième transistor (Q2) connecté à une borne basse tension ;
une pluralité de circuits pilotes de transistors (DRV1, DRV2) connectés au moins aux premier et deuxième transistors (Q1, Q2) afin de piloter les premier et deuxième transistors (Q1, Q2) ;
une unité de contrôleur (118) connectée aux circuits pilotes de transistors (DRV1, DRV2), configurée pour commander les premier et deuxième transistors (Q1, Q2) et pour détecter des transitions du négatif au positif et du positif au négatif d'une tension de la source d'alimentation en courant alternatif (108) sur la base de tensions détectées aux bornes des premier et deuxième transistors (Q1, Q2) ;
**caractérisé en ce que** :
le système convertisseur alternatif-continu à correction du facteur de puissance comprend en outre un dispositif de mesure de tension (110) pouvant être connecté à la source d'alimentation en courant alternatif (108) et configuré pour mesurer la tension de la source d'alimentation en courant alternatif (108) et fournir ladite tension à l'unité de contrôleur (118), qui est configurée pour détecter une erreur dans le dispositif de mesure de tension ; et
dans lequel, en cas de détection de ladite erreur, l'unité de contrôleur (118) est en outre configurée pour détecter des transitions du négatif au positif et du positif au négatif de la tension de la source d'alimentation en courant alternatif (108) ;
dans lequel l'unité de contrôleur (118) est configurée pour générer et appliquer un signal de stimulation à modulation de largeur d'impulsion, PWM, au deuxième transistor (Q2) et détecter une transition du négatif au positif de la tension de la source d'alimentation en courant alternatif (108) sur la base de la tension mesurée aux bornes du premier transistor (Q1) ; et
dans lequel l'unité de contrôleur (118) est configurée pour générer et appliquer un signal de stimulation à modulation de largeur d'impulsion, PWM, au premier transistor (Q1) et détecter une transition du positif au négatif de la tension de la source d'alimentation en courant alternatif (108) sur la base de la tension mesurée aux bornes du deuxième transistor (Q2).

2. Système convertisseur alternatif-continu à PFC (100) selon la revendication 1, dans lequel l'unité de contrôleur (118) est apte à appliquer le signal de stimulation à une borne de commande du deuxième transistor (Q2), et dans lequel la tension aux bornes du premier transistor (Q1) est une tension à des bornes de chemin de courant du premier transistor (Q1).

3. Système convertisseur alternatif-continu à PFC (100) selon la revendication 2, dans lequel les premier et deuxième transistors (Q1, Q2) sont des transistors à effet de champ, dans lequel l'unité de contrôleur (118) est apte à appliquer le signal de stimulation à une grille du deuxième transistor (Q2), et dans lequel la tension à des bornes de chemin de courant du premier transistor (Q1) est une tension drain-source du premier transistor (Q1).

4. Système convertisseur alternatif-continu à PFC (100) selon la revendication 1, dans lequel l'unité de contrôleur (118) est apte à appliquer le signal de stimulation à une borne de commande du premier transistor (Q1), et dans lequel la tension aux bornes du deuxième transistor (Q2) est une tension à des bornes de chemin de courant du premier transistor (Q1).

5. Procédé permettant de faire fonctionner un système convertisseur alternatif-continu à PFC (100) selon la revendication 1, le procédé comprenant, lorsqu'une erreur est détectée concernant les mesures de la tension de la source d'alimentation en courant alternatif (108) :
l'application sélective (602, 606, 612, 802) de signaux de stimulation à PWM aux premier et deuxième transistors (Q1, Q2) du réseau de transistors (104) du système convertisseur alternatif-continu (100) par l'intermédiaire de la pluralité de circuits pilotes de transistors (DRV1, DRV2) ; et
la détection (616, 610, 804) de tensions aux bornes des premier et deuxième transistors (Q1, Q2) en réponse à l'application sélective des signaux de stimulation à PWM aux premier et deuxième transistors (Q1, Q2) afin de détecter des transitions du négatif au positif et du positif au négatif d'une tension de la source d'alimentation en courant alternatif (108) afin d'effectuer une synchronisation avec la source d'alimentation en courant alternatif (108) pour charger une batterie (102) connectée au système convertisseur alternatif-continu (100),
dans lequel l'application sélective (602, 606, 612) des signaux de stimulation à PWM aux premier et deuxième transistors (Q1, Q2) du réseau de transistors (104) comporte l'application d'un signal de stimulation à PWM au deuxième transistor (Q2) afin de mesurer une tension aux bornes du premier transistor (Q1) pour détecter une transition du négatif au positif de la tension de la source d'alimentation en courant alternatif (108) et l'application d'un signal de stimulation à PWM au premier transistor (Q1) afin de mesurer une tension aux bornes du deuxième transistor (Q2) pour détecter une transition du positif au négatif de la tension de la source d'alimentation en courant alternatif (108).

6. Procédé selon la revendication 5, dans lequel l'application d'un signal de stimulation au deuxième transistor (Q2) comporte l'application du signal de stimulation à une borne de commande du deuxième transistor (Q2), et dans lequel la tension aux bornes du premier transistor (Q1) est une tension à des bornes de chemin de courant du premier transistor (Q1).

7. Procédé selon la revendication 6, dans lequel les premier et deuxième transistors (Q1, Q2) sont des transistors à effet de champ, dans lequel l'application du signal de stimulation à la borne de commande du deuxième transistor (Q2) comporte l'application du signal de stimulation à une grille du deuxième transistor (Q2), et dans lequel la tension aux bornes de chemin de courant du premier transistor (Q1) est une tension drain-source du premier transistor (Q1).

8. Procédé selon la revendication 5, dans lequel l'application du signal de stimulation au premier transistor (Q1) comporte l'application du signal de stimulation à une borne de commande du premier transistor (Q1), et dans lequel la tension aux bornes du deuxième transistor (Q2) est une tension à des bornes de chemin de courant du premier transistor (Q1).
